# EUROPÄISCHE PATENTSCHRIFT

(11) **EP 0 806 381 B1**
(45) Veröffentlichungstag und Bekanntmachung des Hinweises auf die Patenterteilung: **12.03.2003**
(21) Anmeldenummer: 97107597.3
(22) Anmeldetag: 07.05.1997
(51) Int. Cl.: B65G 47/14

(54) **Sortiermagazin für die Bevorratung loser Kleinteile**
Sorting magazine for feeding loose small articles
Magasin de tri pour l'approvisionnement de petites pièces séparées

(30) Priorität: 09.05.1996 DE 19618714
(43) Veröffentlichungstag der Anmeldung: 12.11.1997
(73) Patentinhaber: YKK CORPORATION, Chiyoda-ku, Tokyo (JP)
(72) Erfinder: Kamps, Rolf, 42329 Wuppertal (DE)
(74) Vertreter: Patentanwälte Leinweber & Zimmermann

(56) Entgegenhaltungen:
- EP-A- 0 542 688
- DE-A- 4 401 981
- FR-A- 542 714

## Beschreibung

Die Erfindung bezieht sich auf ein Sortiermagazin für die Bevorratung loser Kleinteile, wie Nieten, Ösen, Druckknöpfe usw., mit einem eine vordere Wand und eine Rückwand aufweisenden wannenförmigen Behälter, der eine Einfüllöffnung für die Kleinteile aufweist und zu einem sich an seine Rückwand anschließenden, um eine im wesentlichen horizontale Achse drehbar gelagerten trommelartigen Laufteil führt, das der Vereinzelung und Ausrichtung der Kleinteile zur maschinellen Weiterverarbeitung, insbesondere in Ansetzvorrichtungen dient und dessen relative axiale Position in bezug auf die Rückwand zwecks Anpassung an die Abmessungen der zu vereinzelnden und aus dem Bereich des Laufteils durch eine Austrittsöffnung auszuführenden Kleinteile einstellbar ist.

Bei einem bekannten Sortiermagazin dieser Art (DE 44 O1 981A) bestimmt ein zwischen der Rückwand und der Nabe des Laufteils eingeschalteter Distanzring mit seinen Abmessungen die Größe der Austrittsöffnung für die sortierten Kleinteile. Im Falle eines Wechsels der Art oder der Abmessungen der Kleinteile bedarf es einer Demontage des Laufteils, um eine auf die Abmessungen der neuen Kleinteile abgestimmte Position des Laufteils relativ zur Rückwand mit Hilfe eines Distanzrings abweichender, geeigneter Abmessungen sicherzustellen. Dies ist umständlich und zeitraubend.

Der Erfindung liegt die Aufgabe zugrunde, das Sortiermagazin der eingangs genannten Art so weiter auszubilden, daß im Falle eines Wechsels der Kleinteileart bzw. -abmessungen auf einfachste Weise kurzfristig die geeignete neue Position des Laufteils in bezug auf die Rückwand einstellbar ist.

Das Sortiermagazin nach der Erfindung, bei dem diese Aufgabe gelöst ist, zeichnet sich im wesentlichen dadurch aus, daß eine von außen her in ihrer wirksamen Position in bezug auf die Nabe des.Laufteils einstellbare Stützscheibenanordnung vorgesehen ist. Bei Einsatz einer derartigen Anordnung wird die bislang erforderliche Demontage des Laufteils zwecks Austauschs des Distanzrings gegen einen neuen Ring geeigneter Abmessungen entbehrlich.

Diese Stützscheibenanordnung abweichender effektiver Position läßt sich auf einfache Weise dadurch schaffen, daß in der Rückwand mindestens drei sich parallel zur Laufteilachse erstreckende, um die Achse herum gleichmäßig verteilte Gewindebohrungen mit in sie eingesetzten Schrauben vorgesehen sind, die mit ihren vorderen Enden die Stützscheibenanordnung beaufschlagen und so aufgrund ihrer Einschraubtiefe die Position des Laufteils auf der Laufteilachse bestimmen.

Eine demgegenüber noch einfachere Ausführung nach der Erfindung zeichnet sich dadurch aus, daß zwischen Rückwand und Nabe des Laufteils eine Kugelscheibe und eine Kugelpfanne eingeschaltet sind und daß eines dieser beiden Elemente in seiner Lage in bezug auf das andere Element von außen her mittels einer etwa achsparallel geführten Verstellschraube schrägstellbar ist. Bei dieser Ausführung bedarf es lediglich der Verstellung einer einzigen Verstellschraube, um durch mehr oder weniger starke Verstellung von Kugelscheibe bzw. Kugelpfanne in bezug zueinander die Position des Laufteils den jeweils gegebenen Bedürfnissen entsprechend einzustellen.

Diese Verstellschraube könnte in eine achsparallele Bohrung der Nabe des Laufteils eingesetzt sein, die in eine Gewindebohrung zur Aufnahme der Verstellschraube übergeht. Bevorzugt ist jedoch in weiterer Ausgestaltung der Erfindung eine abweichende Ausführung, bei der die der Lageänderung der beiden Elemente in bezug zueinander dienende Verstellschraube in eine Gewindebohrung der Rückwand eingesetzt ist.

Um nicht gezwungen zu sein, in umständlicher Weise die Schraube vom Innenraum des Kleinteile-Behälters her zu beaufschlagen, wird eine günstigere Lösung bevorzugt, bei der die Verstellschraube einen ihr Verdrehen mittels eines Mehrkantwerkzeugs ermöglichende Mehrkantöffnung aufweist und bei der weiterhin in der vorderen Wand des Kleinteile-Behälters - ausgerichtet auf die die Rückwand durchsetzende Verstellschraube - eine Bohrung vorgesehen ist, durch die das Mehrkantwerkzeug hindurchführbar ist.

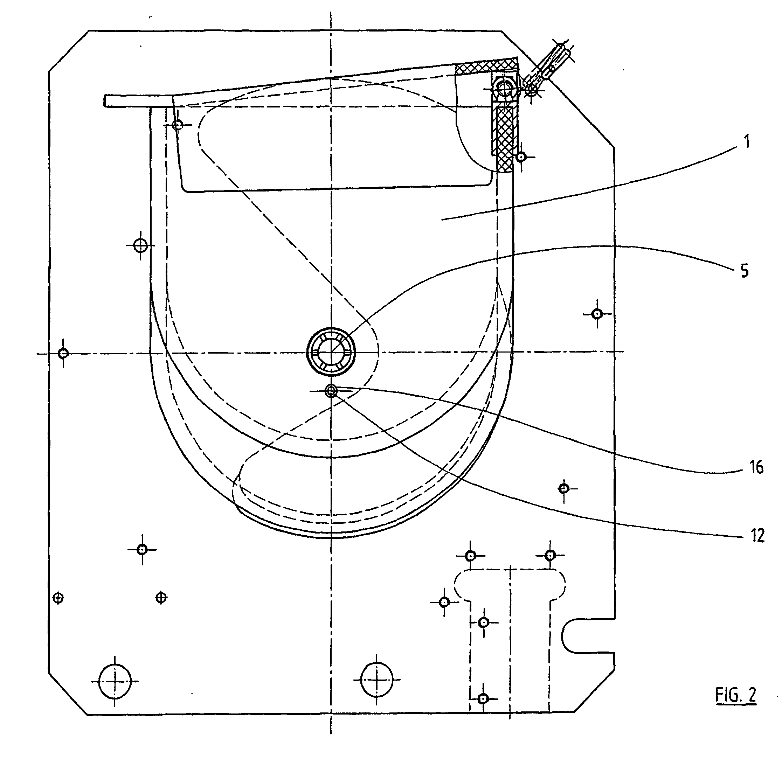

Weitere Einzelheiten, Vorteile und Merkmale der Erfindung ergeben sich aus der folgenden Beschreibung anhand der beigefügten Zeichnung, und zwar zeigen
- Fig. 1: einen Axialschnitt durch das Sortiermagazin entsprechend der Linie I-I der Fig. 2,
- Fig. 2: eine Vorderansicht des Sortiermagazins und
- Fig. 3: eine Schnittansicht entsprechend derjenigen der Fig. 1 zur Veranschaulichung der einstellbaren Stützscheibenanordnung für die Veränderung der Position des Laufteils.

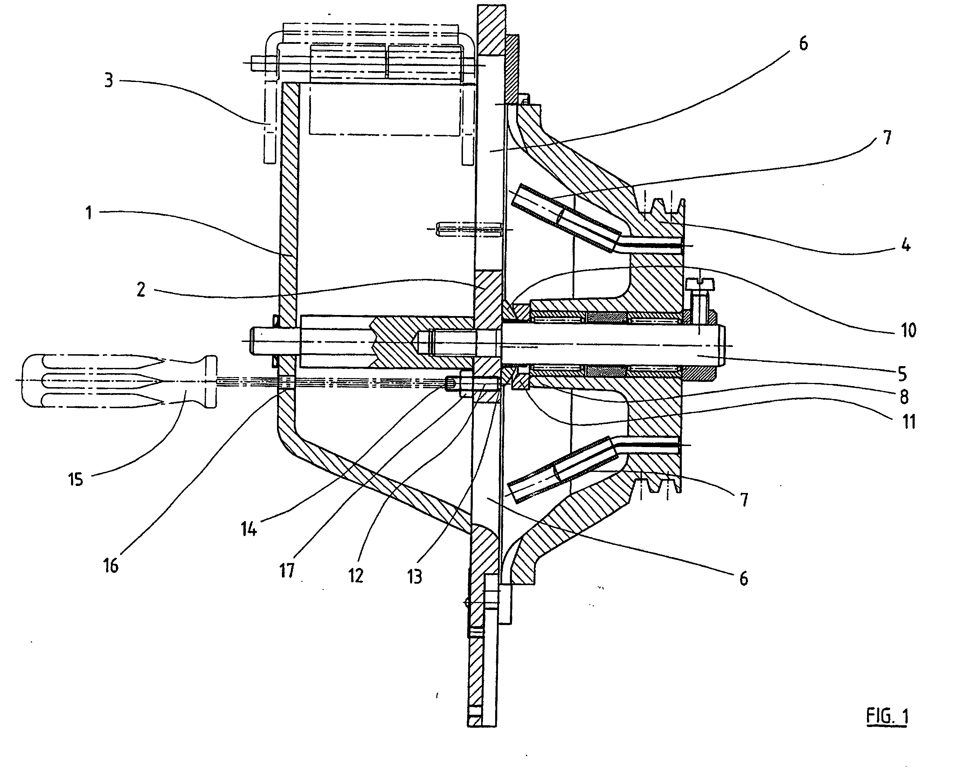

Wie aus der Zeichnung ersichtlich, umfaßt das veranschaulichte Sortiermagazin für die Bevorratung loser Kleinteile, wie Nieten, Ösen, Druckknöpfe usw. einen wannenförmigen Behälter mit einer vorderen Wand 1 und einer Rückwand 2. Dieser wannenförmige Behälter ist über eine Einfüllöffnung 3 mit den Kleinteilen füllbar. An die Rückwand 2 schließt sich ein trommelartiges Lauf teil 4 an, das um eine im wesentlichen horizontale Achse 5 drehbar gelagert ist. Die Rückwand 2 ist mit Durchbrechungen 6 versehen, über die die Kleinteile in den Bereich des Laufteils 4 mit Rührelementen 7 gelangen. Zwischen dem Laufteil 4 und der Rückwand 2 befindet sich eine Austrittsöffnung für die Kleinteile zu einer nicht dargestellten Förderschiene hin. Der Abstand zwischen dem Laufteil 4 und der Rückwand 2 bestimmt die Größe der Kleinteile, die diese Öffnung passieren können. Der fragliche Abstand wird durch die Position des Laufteils 4 auf der Achse 5 bestimmt. In Fig. 1 ist diejenige Lage veranschaulicht, in der die Annäherung des Laufrades 4 an die Rückwand 2 am größten ist. Dementsprechend können nur kleindimensionierte Kleinteile austreten.

Wie die Zeichnung zeigt, liegt die Nabe 8 des Lauf teils 4 an einer Ringscheibe 9 an, die sich ihrerseits über eine Kugelscheibe 10 und eine Kugelpfanne 11 an der Rückwand 2 abstützt.

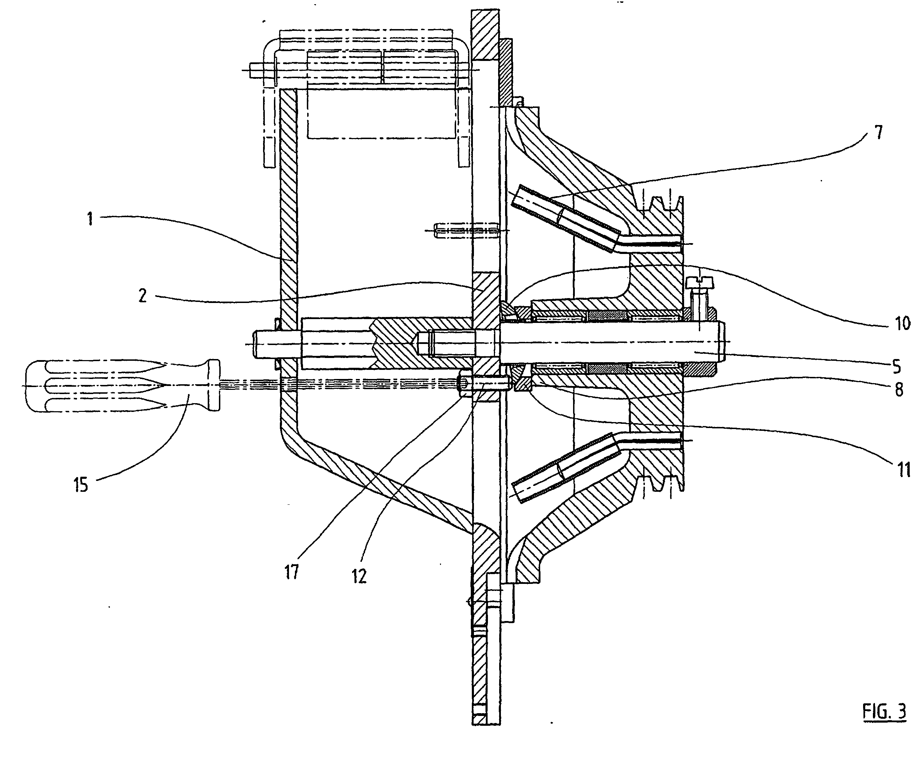

Mit Hilfe einer die Rückwand 2 durchsetzenden Verstellschraube 12 läßt sich die Kugelscheibe 10 aus der in Fig. 1 gezeigten Lage in die in Fig. 3 gezeigte Position schrägstellen. Mit dieser Schrägstellung ist eine Vergrößerung des Abstandes zwischen dem Stützring 9 und damit der Nabe 8 des Laufteils 4 von der Rückwand 2 verbunden. Dementsprechend vergrößert sich der Abstand des Laufteils 4 von der Rückwand 2 auch im Randbereich, so daß nunmehr größer bemessene Kleinteile austreten und über die sich anschließende Schiene abgeführt werden können.

Um die Verstellschraube 12 mehr oder weniger weit aus der sie aufnehmenden Gewindebohrung 13 der Rückwand 2 herausschrauben zu können, weist sie eine Mehrkantöffnung 14 auf, die der Aufnahme eines Mehrkantwerkzeugs 15 dient. Wie aus Fig. 1 ersichtlich, ist für das achsparallele Verstellen der Verstellschraube 12 mit Hilfe des Mehrkantwerkzeugs 15 in der vorderen Wand 1 des Kleinteile-Behälters - ausgerichtet auf die die Rückwand 2 durchsetzende Verstellschraube 12 - eine Bohrung 16 vorgesehen, durch die das Mehrkantwerkzeug hindurchführbar ist. Nach dem Verdrehen der Verstellschraube 12 läßt sie sich in ihrer Position durch Anziehen einer Kontermutter 17 fixieren.

## Patentansprüche

1. Sortiermagazin für die Bevorratung loser Kleinteile, wie Nieten, Ösen, Druckknöpfe usw., mit einem eine vordere Wand (1) und eine Rückwand (2) aufweisenden wannenförmigen Behälter, der eine Einfüllöffnung (3) für die Kleinteile aufweist und zu einem sich an seine Rückwand (2) anschließenden, um eine im wesentlichen horizontale Achse (5) drehbar gelagerten trommelartigen Laufteil (4) führt, das der Vereinzelung und Ausrichtung der Kleinteile zur maschinellen Weiterverarbeitung, insbesondere in Ansetzvorrichtungen dient und dessen relative axiale Position in bezug auf die Rückwand (2) zwecks Anpassung an die Abmessungen der zu vereinzelnden und aus dem Bereich des Laufteils (4) durch eine Austrittsöffnung auszuführenden Kleinteile einstellbar ist, **dadurch gekennzeichnet, daß** eine von außen her in ihrer wirksamen Position in bezug auf die Nabe (8) des Laufteils (4) einstellbare Stützscheibenanordnung (9 bis 11) vorgesehen ist.

2. Sortiermagazin nach Anspruch 1, **dadurch gekennzeichnet, daß** zwischen Rückwand (2) und Nabe (8) des Laufteils (4) eine Kugelscheibe (10) und eine Kugelpfanne eingeschaltet sind und daß eines dieser beiden Elemente in seiner Lage in bezug auf das andere Element von außen her mittels einer etwa achsparallel geführten Verstellschraube (12) schrägstellbar ist.

3. Sortiermagazin nach Anspruch 2, **dadurch gekennzeichnet, daß** die der Lageänderung der beiden Elemente in bezug zueinander dienende Verstellschraube (12) in eine Gewindebohrung (13) der Rückwand (2) eingesetzt ist.

4. Sortiermagazin nach Anspruch 3, **dadurch gekennzeichnet, daß** die Verstellschraube (12) eine ihr Verdrehen mittels eines Mehrkantwerkzeugs (15) ermöglichende Mehrkantöffnung (14) aufweist und daß in der vorderen Wand (1) des Kleinteile-Behälters - ausgerichtet auf die die Rückwand (2) durchsetzende Verstellschraube (12) - eine Bohrung (16) vorgesehen ist, durch die das Mehrkantwerkzeug (15) hindurchführbar ist.

## Claims

1. A sorting magazine for storing loose small items such as rivets, eyelets, snap fasteners, etc., comprising a trough-shaped container having a front wall (1) and a rear wall (2) and provided with a feed opening (3) for the small items and leading to a drum-type rotary part (4) which is connected to the rear wall (2) of the container, is rotatably mounted about a substantially horizontal axis (5) and has the function of separating and aligning the small items for mechanical further processing, in particular in attachment devices, and the axial position of which in relation to the rear wall (2) is adjustable for the purpose of adaptation to the dimensions of the small items which are to be separated and conveyed out of the region of the rotary part (4) through an outlet opening, **characterised in that** a supporting disc arrangement (9 to 11) is provided, the effective position of which in relation to the hub (8) of the rotary part (4) is externally adjustable.

2. A sorting magazine according to claim 1, **characterised in that** a spherical disc (10) and a spherical socket are interposed between the rear wall (2) and the hub (8) of the rotary part (4), and **in that** one of these two components is externally tiltable in relation to the other component by means of a substantially axially parallel adjusting screw (12).

3. A sorting magazine according to claim 2, **characterised in that** the adjusting screw (12), which has the function of changing the relative position of the two components, is inserted into a threaded bore (13) of the rear wall (2).

4. A sorting magazine according to claim 3, **characterised in that** the adjusting screw (12) is provided with a polygonal opening (14) enabling it to be rotated by means of a polygonal tool (15), and **in that** a bore (16), through which the polygonal tool (15) is insertable, is provided in the front wall (1) of the container for the small items and is aligned with the adjusting screw (12) extending through the rear wall (2).

## Revendications

1. Magasin de tri pour l'approvisionnement en petites pièces séparées telles que rivets, oeillets, boutons-pression, etc, comprenant un réceptacle en forme d'auge présentant une paroi avant (1) et une paroi arrière (2), comportant une ouverture de remplissage (3) pour les pièces et menant vers une partie mobile (4) en forme de tambour qui se raccorde à la paroi arrière (2), qui est montée mobile en rotation autour d'un axe (5) sensiblement horizontal, qui sert à séparer et à orienter les pièces en vue de leur mise en oeuvre ultérieure automatique, en particulier sur des dispositifs de pose, et dont la position axiale par rapport à la paroi arrière (2) est réglable en vue de l'adaptation aux dimensions des pièces à séparer et à dégager de la zone de la partie mobile (4) à travers une ouverture de sortie, **caractérisé par le fait qu'**il est prévu un agencement de rondelle d'appui (9 à 11) réglable de l'extérieur quant à sa position active par rapport au moyeu (8) de la partie mobile (4).

2. Magasin de tri suivant la revendication 1, **caractérisé par le fait qu'**une rondelle sphérique (10) et une cuvette sphérique sont intercalées entre la paroi arrière (2) et le moyeu (8) de la partie mobile (4) et que l'un de ces éléments est réglable de l'extérieur quant à sa position d'inclinaison par rapport à l'autre élément au moyen d'une vis de réglage (12) guidée de façon à être réglable à peu près parallèlement à son axe.

3. Magasin de tri suivant la revendication 2, **caractérisé par le fait que** la vis de réglage (12) servant à la modification de position des deux éléments l'un par rapport à l'autre est engagée dans un trou taraudé (13) de la paroi arrière (2).

4. Magasin de tri suivant la revendication 3, **caractérisé par le fait que** la vis de réglage (12) présente une empreinte polygonale (14) permettant sa rotation à l'aide d'un outil polygonal (15) et que la paroi avant (1) du réceptacle de pièces comporte, pour le passage de l'outil polygonal (15), un trou de passage (16) aligné avec la vis de réglage (12) traversant la paroi arrière (2).
